# EUROPEAN PATENT SPECIFICATION

(11) **EP 2 138 377 B1**
(45) Date of publication and mention of the grant of the patent: **25.05.2011**
(21) Application number: 08425446.5
(22) Date of filing: 24.06.2008
(51) Int. Cl.: B62D 7/14, B62D 15/02

(54) **Steering system particularly for industrial vehicles with several steering axles**
Lenksystem, insbesondere für Nutzfahrzeuge mit mehreren Lenkachsen
Système de direction, en particulier pour véhicules utilitaires à essieux directeurs multiples

(43) Date of publication of application: 30.12.2009
(73) Proprietor: Astra Veicoli Industriali S.p.A., 29100 Piacenza (IT)
(72) Inventor: Bertoni, Mauro, 26100 Cremona (IT)
(74) Representative: Borsano, Corrado

(56) References cited:
- EP-A- 0 870 671
- JP-A- 2006 248 267
- US-A- 5 232 238
- US-A- 5 479 999
- US-B1- 6 763 906

## Description

The present invention relates to a steering system for heavy industrial vehicle with more steering axles comprising a steering angular sensor.

At present, in heavy vehicles, in particular in the heavy industrial vehicles with more steering axles, it is known in the art to use of hydraulic steering systems which substantially control the steering of a driven rear axle, the movement of the steering of the driven axle being connected and coordinated by means of a hydraulic circuit and hydraulic actuators, to the movement of the steering of the front axle.

On last generation vehicles, however, in addition to the front axle and to said driven rear axle equipped with hydraulic steering system, there is a third additional axle, in a position longitudinally intermediate between the front axle and the driven rear axle. This additional axle may advantageously be provided with an electronic steering system, that is a steering whose movement is controlled by an actuator connected to an electronic control unit which receives the indication about the steering angle of the main axle detected by an angular sensor.

The present invention, therefore, is applied on vehicles with two or three steering axles provided with such electronically assisted steering systems.

In particular, in such steering systems there is at least an angular sensor which detects at every instant the inclination, or the steering, angle of the wheels of the front axle. Thus, by means of an electronic control unit and of an activation system, they control the steering of the additional axle.

With the presence of the electronically assisted steering system, the driver does not make any additional effort and the manoeuvrability of the vehicle improves a lot without penalizing the driver's comfort.

The steering system is made of different components, such as the hydroguide box, steering levers, tension rods and other components according to what is known in the art. The angular sensor is placed in relation with such elements, it detects the steering angle of the front axle wheels and sends the data to the control unit which controls the steering actuator on the additional axle.

The positioning of the angular sensor is complex, because it has to be positioned in order to be protected from accidental bumps and from the mechanical elements controlling the steering, the suspensions elements and similar mechanical elements.

US-6763906-B1 shows a steering system corresponding to the preamble of claim 1.

The main task of the present invention is to provide a steering system of the type comprising an angular sensor for detecting the steering angle on an axle, characterized in that it is connected to a steering sensor placed on the vehicle frame, in a position protected from accidental bumps and protected from the mechanical elements involving the axle where the sensor is placed.

In the scope of this task, the aim of the present invention is to provide a connection system of a steering sensor on the frame of a vehicle, which an easy manufacturing and therefore an easy maintenance and which assures a steady mounting of the sensor.

This task and these and other purposes that are explained below are achieved by a steering system as described in claim 1.
Further characteristics and advantages of the present invention will become clear from the following detailed description, that is merely illustrative and not limitative and is shown in the figures that are attached hereto, in which:
figure 1 shows a vehicle axle comprising a steering system with angular sensor placed according to what is known in the art;
figure 2 schematically shows the frame and an axle of a vehicle comprising the steering system according to the present invention;
figure 3 shows a detail of the steering system according to the present invention;
figure 4 shows a view of a detail of the steering system according to the present invention;
figure 5 partially shows an exploded view of a detail of a kinematic mechanism of the steering system according to the present invention.

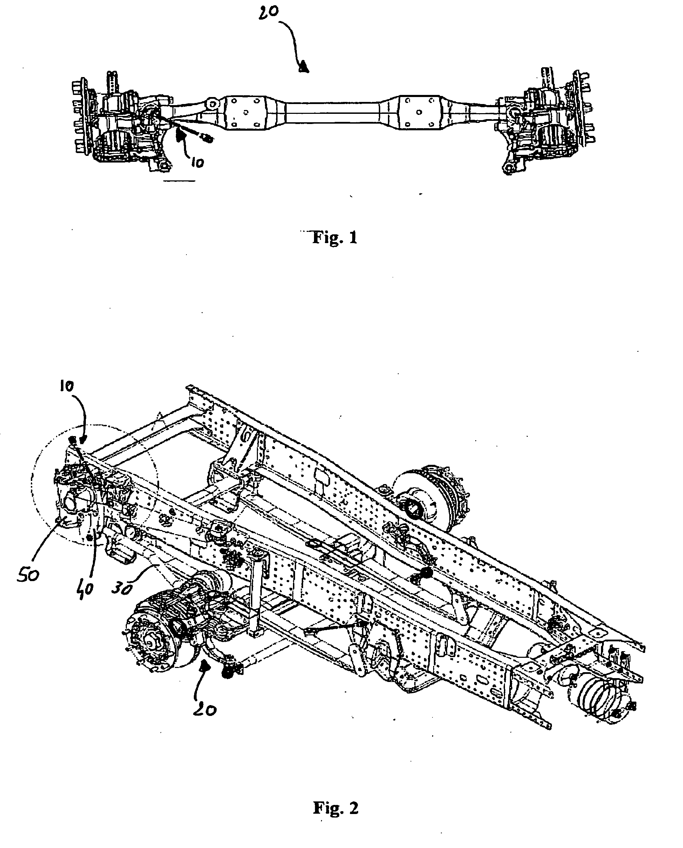

Figure 1 shows a steering system according to what is known in the art.

For the industrial vehicles with more steering axles, systems are known in the art wherein the angular sensor 10 is mounted directly on the front axle 20 near the wheel suspension unit. In this configuration the sensor 10 rotates in a horizontal plane, detecting the steering angle. According to such configuration the sensor 10 is exposed to accidental bumps due to the suspension movement caused by the ground irregularities. Also, it is placed near the mechanical elements of the steering unit, of the suspensions and of the brakes.

Figure 2 shows a vehicle frame to which is connected a first axle 20 and which comprises the steering system according to the present invention.

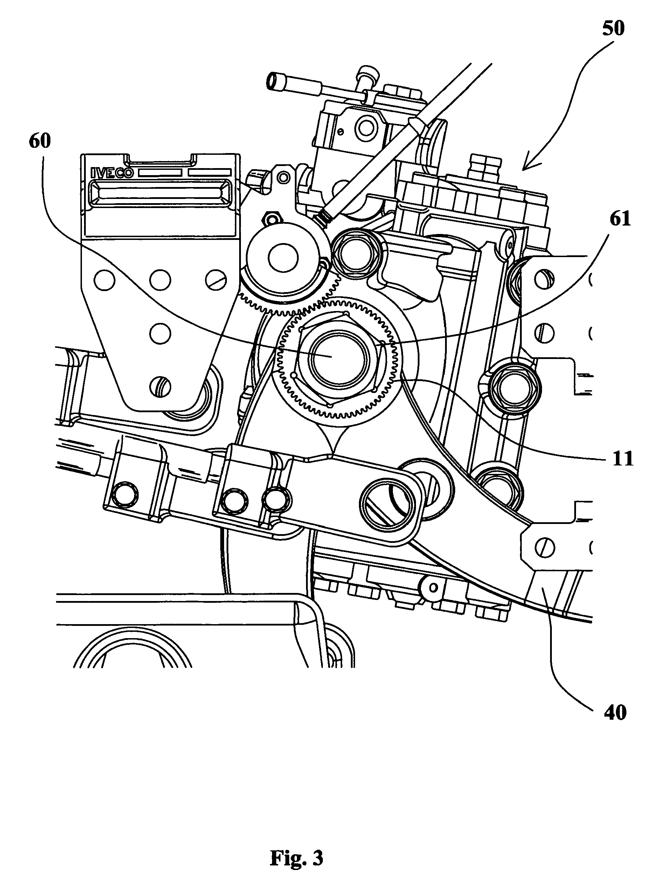

Also with reference to figure 2, the steering system according to the present invention comprises an angular sensor 10 placed far from the wheel axle 20. In particular, figure 3 shows that the angular sensor 10 is connected to the vehicle frame and that it does not receive the motion directly from the wheels, that is the elements of the articulated quadrilateral which make the steering, as in the system known, but it receives the motion directly from the hydroguide box 50 which controls the front axle steering 20.

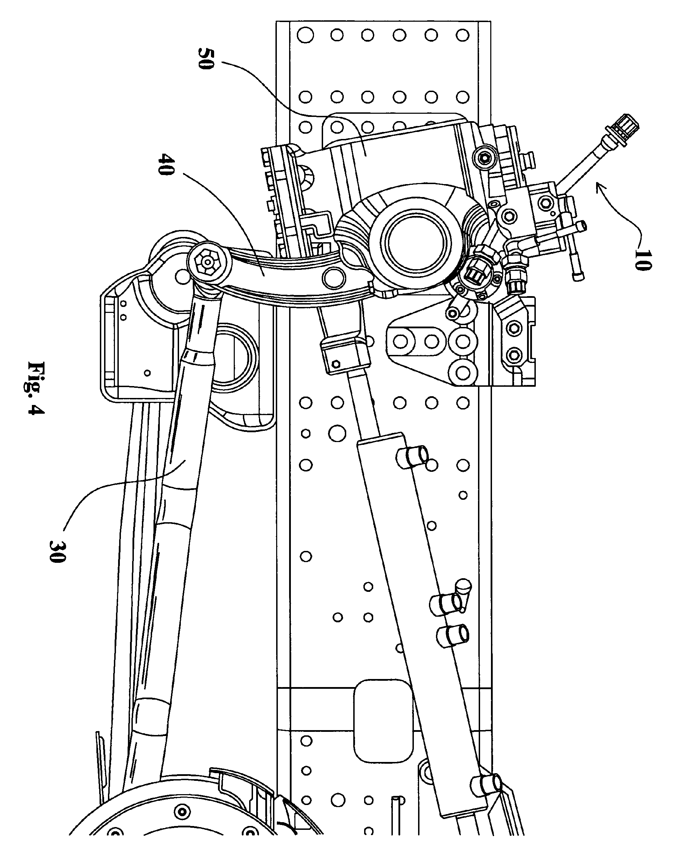

The hydroguide box 50 governs the steering of the front axle 20 by means of a leverage system. In particular, with reference for example to figure 4, from the hydroguide 50 a first lever of the hydroguide 40 is connected to a tension rod 30 which manoeuvres the steering from the axle 20. This way the hydroguide 50 assists the steering of the wheel of the first axle 20.

With particular reference to figure 3, the hydroguide lever 40 is connected to the hydroguide box 50 by means of motion transmission means which are, in the embodiment shown here which is merely illustrative, made of a shaft 60. There may also be a tightening nut 61 in order to block said lever 40 on the shaft 60, as to assure the transmission of the rotational motion of the shaft 60 of the hydroguide box 50 to the hydroguide lever 40.

By means of this connection, the shaft 60 rotational motion around its axis is transformed in a rotational motion of the hydroguide lever 40 around the rotation center 60. The lever 40 is then connected to the tension rod 30 which exerts a thrust and/or a traction action on the kinematic mechanism of the steering of the axle 20, not shown in the figures.

In order to transmit the motion of the shaft 60 of the hydroguide box to the angular sensor 10 there is a kinematic mechanism 11, 12.

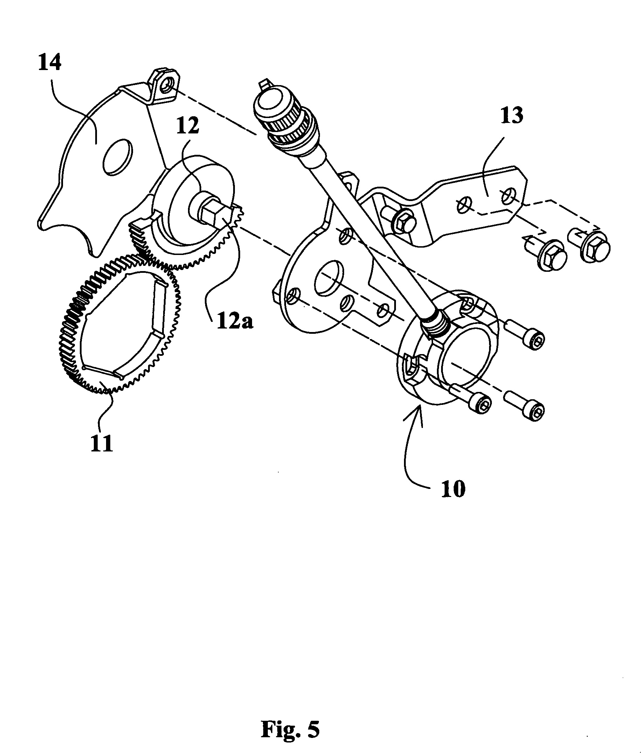

More in particular, a first gear wheel 11 is connected to the shaft 60, as shown in the exploded view of figure 5. The first gear wheel 11 has a substantially annular shape so that the internal profile of the gear wheel is conjugated with the profile of the tightening nut 61 which is on the shaft in order to connect the hydroguide lever 40.

This way, the gear wheel 11 may be easily connected, without any modification or additional elements, to the shaft 60 of the hydroguide box 50, as shown in figure 3.

A second gear wheel 12, suitable for engaging with the first gear wheel 11, is connected to the angular sensor 10.

More in particular, with reference to figure 5, the second gear wheel 12 has an axial pin 12a integral with it and suitable for being connected with said angular sensor 10. By means of the axial pin 12a the rotation of the second angular sensor 12, induced by the rotation of the first gear wheel 11 which rotates integrally with the shaft 60 of the hydroguide mechanism, the angular sensor 10 receives the movement of the steering.

Moreover, advantageously several supporting brackets 13, 14 allow the angular sensor 10 and the second gear wheel 12 to be connected directly to the vehicle frame or to another point near the hydroguide box, that is far from the wheel axle.

Therefore it has been shown that the steering system for heavy industrial vehicles for a vehicle provided with electronic steering on at least one axle according to the present invention achieves the purpose and the objects proposed.

In particular, it has been shown that, according to the steering system according to the present invention, the angular sensor 10 is connected in a point far form the axle 20 and therefore it is protected from possible accidental bumps and from possible interferences with the mechanical elements in motion.

Moreover, with the steering system according to the present invention it is possible to reposition the angular sensor without having to modify the hydroguide box or other system's elements.

Also, a further aim achieved by the present invention is that the assembling of the angular sensor, and of the kinematic mechanism connected to it, is steady and is not subjected to accidental modification, the kinematic mechanisms which transmit the motion to the angular sensor being firmly held by the bracket system.

Also, the system according to the present invention has an extremely simple and cheap construction and maintenance operations, if any.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention.

## Claims

1. Steering system particularly for heavy industrial vehicles with more than one steering axles (20), comprising:
- a hydraulic power steering fixed on the vehicle frame and comprising a rotating shaft (60);
- at least a steering lever (40) connected to said rotating shaft (60);
- at least one steering angular sensor (10) for detecting the steering angle of the wheels, said angular sensor (10) being placed near the vehicle frame at a point far from each of said more than one steering axles (20), and connected to said rotating shaft (60) by means of a kinematic mechanism (11, 12), in turn connected to said hydraulic power steering, said kinematic mechanism (11, 12) comprising a first gear wheel (11) connected to the rotating shaft (60), and a second gear wheel (12) suitable for transmitting the rotation of said first gear wheel (11) to said angular sensor (10)
**characterized in that** said rotating shaft (60) is provided with a tightening nut (61) in order to tighten said hydraulic power steering lever (40) on the rotating shaft (60) and said first gear wheel (11) has an annular shape with an internal profile which is conjugated with the profile of the tightening nut (61).

2. Steering system according to claim 1, wherein said hydraulic power steering(50) controls the steering of said more than one steering axles (20) by means of steering linkages.

3. Steering system according to claim 2, wherein said rotating shaft (60) comes out from said hydraulic power steering (50), and wherein the steering linkages further comprise at least a tension rod (30) with an end hinged to said hydraulic power steering lever (40) and with another end connected to a steering articulated quadrilateral of said steering axle (20).

4. Steering system according to any of the previous claims, wherein said angular sensor (10) is connected to the vehicle frame by means of supporting brackets (13, 14).

5. Steering system according to any of the previous claims, wherein said supporting brackets (13, 14) support said second gear wheel (12) leaving it free to rotate around its axis.

6. Steering system according to any of the previous claims, wherein said angular sensor (10) controls an electronic device for the steering of the wheels of an additional axle provided with electronic steering system.

7. Vehicle comprising a steering system according to any of the previous claims.

## Patentansprüche

1. Lenksystem, insbesondere für industrielle Schwerlastfahrzeuge mit mehr als einer Lenkachse (20), umfassend:
- eine hydraulische Servolenkung, die an dem Fahrzeugrahmen fixiert ist und eine rotierende Welle (60) umfast;
- zumindest einen Lenkhebel (40), der mit der rotierenden Welle (60) verbunden ist;
- zumindest einen Lenkwinkelsensor (10) zur Detektion des Lenkwinkels der Räder, wobei der Winkelsensor (10) nahe dem Fahrzeugrahmen an einem Punkt angeordnet ist, der weit von jeder der mehr als einen Lenkachse (20) entfernt ist, und mit der rotierenden Welle (60) mittels eines kinematischen Mechanismus (11, 12) verbunden ist, der seinerseits mit der hydraulischen Servolenkung verbunden ist, wobei der kinematische Mechanismus (11, 12) ein erstes Zahnrad (11), das mit der rotierenden Welle (60) verbunden ist, und ein zweites Zahnrad (12) aufweist, das zur Übertragung der Rotation des ersten Zahnrades (11) auf den Winkelsensor (10) geeignet ist,
**dadurch gekennzeichnet, dass** die rotierende Welle (60) mit einer Klemmmutter (61) versehen ist, um den hydraulischen Servolenkhebel (40) an die rotierende Welle (60) zu klemmen, und das erste Zahnrad (11) eine ringförmige Form mit einem Innenprofil besitzt, das mit dem Profil der Klemmmutter (61) konjugiert ist.

2. Lenksystem nach Anspruch 1,
wobei die hydraulische Servolenkung (50) das Lenken der mehr als einen Lenkachse (20) mittels von Lenkgestängen steuert.

3. Lenksystem nach Anspruch 2,
wobei die rotierende Welle (60) aus der hydraulischen Servolenkung (50) herauskommt, und wobei die Lenkgestänge ferner zumindest eine Zugstange (30) mit einem Ende, das an dem hydraulischen Servolenkhebel (40) angelenkt ist, und mit einem anderen Ende umfassen, das mit einem Lenk-Gelenkviereck der Lenkachse (20) verbunden ist.

4. Lenksystem nach einem der vorhergehenden Ansprüche,
wobei der Winkelsensor (10) mit dem Fahrzeugrahmen mittels von Lagerhalterungen (13, 14) verbunden ist.

5. Lenksystem nach einem der vorhergehenden Ansprüche,
wobei die Lagerhalterungen (13, 14) das zweite Zahnrad (12) lagern, wobei es frei bleibt, sich um seine Achse zu drehen.

6. Lenksystem nach einem der vorhergehenden Ansprüche,
wobei der Winkelsensor (10) eine elektronische Vorrichtung für das Lenken der Räder einer zusätzlichen Achse steuert, die mit einem elektronischen Lenksystem versehen ist.

7. Fahrzeug, mit einem Lenksystem nach einem der vorhergehenden Ansprüche.

## Revendications

1. Système de direction, particulièrement pour des véhicules industriels lourds avec un ou plusieurs essieux directeurs (20), comprenant :
- une direction assistée hydraulique fixée sur le cadre de véhicule et comprenant un arbre rotatif (60) ;
- au moins un levier de direction (40) relié audit arbre rotatif (60) ;
- au moins un capteur angulaire de braquage (10) pour détecter l'angle de braquage des roues, ledit capteur angulaire (10) étant positionné près du cadre de véhicule à un point éloigné de chacun dudit ou desdits essieux directeurs (20), et relié audit arbre rotatif (60) au moyen d'un mécanisme cinématique (11, 12), relié à son tour à ladite direction assistée hydraulique, ledit mécanisme cinématique (11, 12) comprenant une première roue d'engrenage (11) reliée à l'arbre rotatif (60), et une seconde roue d'engrenage (12) appropriée pour transmettre la rotation de ladite première roue d'engrenage (11) audit capteur angulaire (10),
**caractérisé en ce que** ledit arbre rotatif (60) est pourvu d'un écrou de serrage (61) afin de serrer ledit levier de direction assistée hydraulique (40) sur l'arbre rotatif (60) et ladite première roue d'engrenage (11) présente une forme annulaire avec un profil interne qui se conjugue avec le profil de l'écrou de serrage (61).

2. Système de direction selon la revendication 1, dans lequel ladite direction assistée hydraulique (50) commande l'orientation dudit ou desdits essieux directeurs (20) au moyen de tringleries de direction.

3. Système de direction selon la revendication 2, dans lequel ledit arbre rotatif (60) sort de ladite direction assistée hydraulique (50), et dans lequel les tringleries de direction comprennent en outre au moins une barre de tension (30) avec une extrémité articulée sur ledit levier de direction assistée hydraulique (40) et avec une autre extrémité reliée à un quadrilatère articulé de direction dudit essieu directeur (20).

4. Système de direction selon l'une quelconque des revendications précédentes, dans lequel ledit capteur angulaire (10) est relié au cadre de véhicule au moyen de pattes de support (13, 14).

5. Système de direction selon l'une quelconque des revendications précédentes, dans lequel lesdites pattes de support (13, 14) supportent ladite seconde roue d'engrenage (12), la laissant libre de tourner autour de son axe.

6. Système de direction selon l'une quelconque des revendications précédentes, dans lequel ledit capteur angulaire (10) commande un dispositif électronique pour l'orientation des roues d'un essieu supplémentaire pourvu d'un système de direction électronique.

7. Véhicule comprenant un système de direction selon l'une quelconque des revendications précédentes.
